# EUROPÄISCHE PATENTSCHRIFT

(11) **EP 1 430 406 B1**
(45) Veröffentlichungstag und Bekanntmachung des Hinweises auf die Patenterteilung: **08.06.2005**
(21) Anmeldenummer: 02774357.4
(22) Anmeldetag: 13.09.2002
(51) Int. Cl.: G06F 13/36

(54) **VERFAHREN ZUR ARBITRIERUNG EINES ZUGRIFFS AUF EINEN DATENBUS**
METHOD FOR THE ARBITRATION OF ACCESS TO A DATA BUS
PROCEDE POUR L'ARBITRAGE D'UN ACCES A UN BUS DE DONNEES

(30) Priorität: 26.09.2001 DE 10147437; 26.07.2002 DE 10234145
(43) Veröffentlichungstag der Anmeldung: 23.06.2004
(73) Patentinhaber: SIEMENS AKTIENGESELLSCHAFT, 80333 München (DE)
(72) Erfinder: BRÜCKNER, Dieter, 96199 Zapfendorf (DE); GÖTZ, Franz, Josef, 91180 Heideck (DE); KLOTZ, Dieter, 90768 Fürth (DE); SCHIMMER, Jürgen, 90473 Nürnberg (DE); SCHWEIKART, Matthias, 91056 Erlangen (DE)
(86) Internationale Anmeldenummer: PCT/DE2002/003436
(87) Internationale Veröffentlichungsnummer: WO 2003/027869

(56) Entgegenhaltungen:
- WO-A-98/12645
- US-A- 4 395 753
- US-A- 4 730 268
- US-B1- 6 272 580
- "ONE-BIT TOKEN RING ARBITRATION PROTOCOL/SCHEME" IBM TECHNICAL DISCLOSURE BULLETIN, IBM CORP. NEW YORK, US, Bd. 33, Nr. 2, 1. Juli 1990 (1990-07-01), Seiten 325-331, XP000123638 ISSN: 0018-8689

## Beschreibung

Die Erfindung betrifft ein Verfahren zur Arbitrierung eines Zugriffs auf einen Datenbus, wobei die Teilnehmer durch zumindest einen Arbitrierungsring gekoppelt sind, sowie einen entsprechenden Teilnehmer und ein Kommunikationssystem.

Unter einem synchronen, getakteten Kommunikationssystem mit Äquidistanz-Eigenschaften versteht man ein System aus wenigstens zwei Teilnehmern, die über ein Datennetz zum Zweck des gegenseitigen Austausches von Daten bzw. der gegenseitigen Übertragung von Daten miteinander verbunden sind. Dabei erfolgt der Datenaustausch zyklisch in äquidistanten Kommunikationszyklen, die durch den vom System verwendeten Kommunikationstakt vorgegeben werden. Teilnehmer sind beispielsweise zentrale Automatisierungsgeräte, Programmier-, Projektierungs- oder Bediengeräte, Peripheriegeräte wie z.B. Ein-/Ausgabe-Baugruppen, Antriebe, Aktoren, Sensoren, speicherprogrammierbare Steuerungen (SPS) oder andere Kontrolleinheiten, Computer, oder Maschinen, die elektronische Daten mit anderen Maschinen austauschen, insbesondere Daten von anderen Maschinen verarbeiten. Teilnehmer werden auch Netzwerkknoten oder Knoten genannt. Unter Kontrolleinheiten werden im folgenden Regler- oder Steuerungseinheiten jeglicher Art verstanden, aber auch beispielsweise Switches und/oder Switch-Controller. Als Datennetze werden beispielsweise Bussysteme wie z.B. Feldbus, Profibus, Ethernet, Industrial Ethernet, FireWire oder auch PC-interne Bussysteme (PCI), etc., insbesondere aber auch isochrones Realtime Ethernet verwendet.

Datennetze ermöglichen die Kommunikation zwischen mehreren Teilnehmern durch die Vernetzung, also Verbindung der einzelnen Teilnehmer untereinander. Kommunikation bedeutet dabei die Übertragung von Daten zwischen den Teilnehmern. Die zu übertragenden Daten werden dabei als Datentelegramme verschickt, d.h. die Daten werden zu mehreren Paketen zusammengepackt und in dieser Form über das Datennetz an den entsprechenden Empfänger gesendet. Man spricht deshalb auch von Datenpaketen. Der Begriff Übertragung von Daten wird dabei in diesem Dokument völlig synonym zur oben erwähnten Übertragung von Datentelegrammen oder Datenpaketen verwendet.

In verteilten Automatisierungssystemen, beispielsweise im Bereich Antriebstechnik, müssen bestimmte Daten zu bestimmten Zeiten bei den dafür bestimmten Teilnehmern eintreffen und von den Empfängern verarbeitet werden. Man spricht dabei von echtzeitkritischen Daten bzw. Datenverkehr, da ein nicht rechtzeitiges Eintreffen der Daten am Bestimmungsort zu unerwünschten Resultaten beim Teilnehmer führt, im Gegensatz zur nicht echtzeitkritischen, beispielsweise inter- bzw. intranetbasierten Datenkommunikation. Gemäss IEC 61491, EN61491 SERCOS interface - Technische Kurzbeschreibung (http://www.sercos.de/deutsch/index_deutsch.htm) kann ein erfolgreicher echtzeitkritischer Datenverkehr der genannten Art in verteilten Automatisierungssystemen gewährleistet werden.

Automatisierungskomponenten (z.B. Steuerungen, Antriebe,...) verfügen heute im Allgemeinen über eine Schnittstelle zu einem zyklisch getakteten Kommunikationssystem. Eine Ablaufebene der Automatisierungskomponente (Fast-cycle) (z.B. Lageregelung in einer Steuerung, Drehmomentregelung eines Antriebs) ist auf den Kommunikationszyklus synchronisiert. Dadurch wird der Kommunikationstakt festgelegt. Andere, niederperformante Algorithmen (Slow-cycle) (z.B. Temperaturregelungen) der Automatisierungskomponente können ebenfalls nur über diesen Kommunikationstakt mit anderen Komponenten (z.B. Binärschalter für Lüfter, Pumpen,...) kommunizieren, obwohl ein langsamerer Zyklus ausreichend wäre. Durch Verwendung nur eines Kommunikationstaktes zur Übertragung von allen Informationen im System entstehen hohe Anforderungen an die Bandbreite der Übertragungsstrecke.

Aus dem Stand der Technik sind verschiedene zentralisierte und dezentrale Arbitrierungsverfahren für den Zugriff auf einen Datenbus bekannt. Bei dem zentralisierten Arbitrierungsverfahren entscheidet ein zentraler Arbiter, welcher Busteilnehmer, der eine Zugriffsanforderung gestellt hat, Zugriff auf den Bus bekommt. Ein Beispiel für ein zentralisiertes Arbitrierungsverfahren ist der Round-Robin Algorithmus.

Bei den dezentralen Arbitrierungsverfahren erfolgt die Busarbitrierung dezentral in jedem Busteilnehmer. Ein Beispiel für ein derartiges Verfahren ist der Daisy-Chain Algorithmus.

US-A-4 730 268 zeigt ein dezentrales Arbitrierungsverfahren, wobei die Busteilnehmer durch einen Arbitrierungsring gekoppelt sind.

Der Erfindung liegt die Aufgabe zugrunde, ein verbessertes Arbitrierungsverfahren zu schaffen sowie einen verbesserten Teilnehmer und ein Kommunikationssystem.

Die der Erfindung zugrunde liegenden Aufgaben werden mit den Merkmalen der entsprechenden unabhängigen Patentansprüche jeweils gelöst. Bevorzugte Ausführungsform der Erfindung sind in den abhängigen Patentansprüchen angegeben.

Die Erfindung ermöglicht die Schaffung eines Kommunikationssystems, in dem die Anzahl der Arbitrierungsringe unabhängig von der Anzahl der Busteilnehmer ist. Das entsprechende Arbitrierungsverfahren funktioniert also unabhängig von der Anzahl der Teilnehmer und ist somit im Prinzip beliebig skalierbar. Dabei kann eine maximale Verzögerungszeit für den Zugriff auf einen Bus, die sogenannte Latency-Time, garantiert werden.

Nach einer bevorzugten Ausführungsform der Erfindung werden Zugriffsanforderungen unterschiedlicher Prioritäten unterstützt, indem für jede der möglichen Prioritäten ein separater Arbitrierungsring vorgesehen ist.

Nach einer weiteren bevorzugten Ausführungsform der Erfindung
- ist jedem Busteilnehmer eine Arbitrierungseinheit zugeordnet,
- kann jede Arbitrierungseinheit eines Busteilnehmers z.B. zwei Prioritäten LP und HP unterstützen, wobei LP die niedrige Priorität und HP die hohe Priorität kennzeichnet.

Nach einer weiteren bevorzugten Ausführungsform der Erfindung sind die Arbitrierungseinheiten der Busteilnehmer bei zwei unterstützten Prioritäten zu einem niederprioren Ring und zu einem hochprioren Ring zusammengeschaltet. Vorteilhaft ist es dabei, wenn die Arbitrierungseinheit eines Busteilnehmers den niederprioren Ring unterbrechen kann, damit keine kombinatorische Rückkopplung auftritt. Dieser Busteilnehmer ist der niederpriore Ringmaster.

Nach einer weiteren bevorzugten Ausführungsform der Erfindung
- ist der niederpriore Ringmaster immer der aktuelle Busmaster, der Schreib- und Lesezugriffe über den Bus ausführen kann,
- kann jeder Busteilnehmer der niederpriore Ringmaster und damit Busmaster werden.
- wird ein Busteilnehmer der neue niederpriore Ringmaster,
   - wenn bei diesem Busteilnehmer der niederpriore Bus-Request aktiviert ist
      und
   - der bisherige Busmaster bereit ist, sein Buszugriffsrecht abzugeben
      und
   - kein weiterer niederpriorer Busrequest eines Busteilnehmers zwischen dem alten und dem neuen niederprioren Ringmaster anliegt,
- muss immer die Arbitrierungseinheit eines Busteilnehmers den hochprioren Ring unterbrechen, damit keine kombinatorische Rückkopplung auftritt. Dieser Busteilnehmer ist der hochpriore Ringmaster,
- kann jeder Busteilnehmer der hochpriore Ringmaster werden,
- muss ein Busteilnehmer der als Busmaster hochpriore Schreib- und Lesezugriffe ausführt, sowohl niederpriorer Ringmaster als auch hochpriorer Ringmaster sein,
- muss ein Busteilnehmer der als Busmaster niederpriore Schreib- und Lesezugriffe ausführt, der niederpriore Ringmaster sein,
- ist ein hochpriorer Ringmaster zum Masterwechsel am hochprioren Ring bereit, wenn
   - kein hochpriorer Busrequest bei diesem Busteilnehmer anliegt.
      Oder
   - ein hochpriorer Busrequest anliegt und dieser Busteilnehmer bereits Busmaster ist.

Ist eine von den o.g. beiden Bedingungen erfüllt, wird am Ausgang der Arbitrierungseinheit des hochprioren Ringmasters der Signalpegel für "HP-Ring freigegeben" am hochprioren Ring ausgegeben.

Empfängt der hochpriore Ringmaster den Signalpegel "HP-Ring freigegeben" den er am Ausgang seiner Arbitrierungseinheit auf den hochprioren Ring gelegt hat, wieder am Eingang seiner Arbitrierungseinheit, hat kein anderer Busteilnehmer einen hochprioren Bus-Request gestellt. In diesem Fall kommt es zu keinem Masterwechsel am hochprioren Ring.

Keine von beiden Bedingungen ist erfüllt, wenn der hochpriore Ringmaster trotz einem aktivierten hochprioren Busrequest nicht der Busmaster ist. In diesem Fall wird am Ausgang der Arbitrierungseinheit des hochprioren Ringmasters der Signalpegel für "HP-Ring belegt" am hochprioren Ring ausgegeben.

Nach einer weiteren bevorzugten Ausführungsform der Erfindung
- wird ein Busteilnehmer ab dem nächsten Bustakt der neue hochpriore Ringmaster, wenn folgende Bedingungen erfüllt sind,
- der hochpriore Bus-Request muss aktiviert sein,
- am Eingang seiner Arbitrierungseinheit muss der Signalpegel für "HP-Ring freigegeben" anliegen.

Damit im aktuellen Bustakt diese Bedingungen nicht auch bei anderen Busteilnehmern erfüllt werden und es nur einen hochprioren Ringmaster geben darf, gibt dieser Busteilnehmer am Ausgang seiner Arbitrierungseinheit den Signalpegel für "HP-Ring belegt" am hochprioren Ring aus. Dieser Signalpegel bleibt solange aktiviert bis der neue hochpriore Ringmaster zum Masterwechsel am hochprioren Ring bereit ist und auf den Signalpegel für "HP-Ring freigegeben" am hochprioren Ring umschaltet.

Ist nach der Initialisierung des Bussystems ein Busteilnehmer als Busmaster und als hochpriorer Ringmaster voreingestellt, kann in jeder Arbitrierungseinheit die maximale Zugriffszeit auf den Bus parametriert werden.

Voreingestellt ist ein Bustakt. Ein Busmaster kann das Buszugriffsrecht jederzeit vor Ablauf der maximalen Zugriffszeit wieder abgeben. Hat ein anderer Busteilnehmer einen (nieder- oder hochprioren) Bus-Request gestellt, gibt die Arbitrierungseinheit des aktuellen Busmasters das Buszugriffsrecht spätestens nach Ablauf der maximalen Zugriffszeit wieder ab. Ist die maximale Zugriffszeit abgelaufen, erfolgt dieser Master-Wechsel auch dann, wenn beim bisherigen Busmaster das Bus-Request noch gesetzt ist. Solange kein anderer Busteilnehmer einen (nieder- oder hochprioren) Busrequest stellt, behält der aktuelle Busmaster das Buszugriffsrecht auch nach Ablauf der maximalen Zugriffszeit.

Nach einer weiteren bevorzugten Ausführungsform der Erfindung kann in jeder Arbitrierungseinheit eine Pausezeit parametriert werden, die ablaufen muss, bevor ein Busmaster nach Abgabe seines Buszugriffsrechts wieder Busmaster werden kann. Voreingestellt ist ein Bustakt. Diese Pausezeit wird auch dann eingehalten, wenn der Busteilnehmer einen niederprioren oder hochprioren Bus-Request an seine Arbitrierungseinheit gestellt hat.

Nach einer weiteren bevorzugten Ausführungsform der Erfindung ergibt sich folgender Ablauf der Arbitrierung bei zwei unterstützten Prioritäten:
- Solange der aktuelle Busmaster das Buszugriffsrecht behalten will, aktiviert die Arbitrierungseinheit des Busmasters "Bus belegt" (z.B. eine logische 0) am niederprioren Ring.
- Ist der aktuelle Busmaster bereit das Buszugriffsrecht abzugeben, aktiviert dessen Arbitrierungseinheit "Busfreigabe" (z.B. eine logische 1) am niederprioren Ring.
- Damit ein Busteilnehmer, der einen niederprioren Bus-Request an seine Arbitrierungseinheit gestellt hat, der neue Busmaster werden kann, müssen folgende Bedingungen erfüllt sein:
   - am hochprioren Eingang seiner Arbitrierungseinheit muss der Signalpegel für "HP-Ring freigegeben" anliegen.
   - am niederprioren Eingang seiner Arbitrierungseinheit muss der Signalpegel für "Busfreigabe" anliegen.
   - die parametrierte Pausezeit zwischen Abgabe und erneutem Erhalt des Buszugriffsrechts muss abgelaufen sein.

Sind alle Bedingungen erfüllt, wird dieser Busteilnehmer ab dem nächsten Bustakt der neue Busmaster. Damit im aktuellen Bustakt diese Bedingungen nicht auch bei anderen Busteilnehmern erfüllt werden und es nur einen Busmaster geben darf, gibt dieser Busteilnehmer am Ausgang seiner Arbitrierungseinheit den Signalpegel für "Bus belegt" am niederprioren Ring aus. Dieser Signalpegel bleibt solange aktiviert bis der neue Busmaster bereit ist das Buszugriffsrecht wieder abzugeben und auf den Signalpegel für "Busfreigabe" am niederprioren Ring umschaltet.

Empfängt ein Busmaster den Signalpegel "Busfreigabe" den er am Ausgang seiner Arbitrierungseinheit auf den niederprioren Ring gelegt hat, wieder am Eingang seiner Arbitrierungseinheit, sind im aktuellen Bustakt von keinem Busteilnehmer die Bedingungen für einen Masterwechsel am Bus erfüllt worden. In diesem Fall behält der aktuelle Busmaster das Buszugriffsrecht und kann weitere Schreib- oder Lese-zugriffe auf die gemeinsam genutzten Ressourcen ausführen, bis ein anderer Busteilnehmer einen Bus-Request stellt.

Damit ein Busteilnehmer, der einen hochprioren Bus-Request an seine Arbitrierungseinheit gestellt hat, der neue Busmaster werden kann, müssen folgende Bedingungen erfüllt sein:
- der Busteilnehmer muss der hochpriore Ringmaster sein,
- am niederprioren Eingang seiner Arbitrierungseinheit muss der Signalpegel für "Busfreigabe" anliegen,
- die parametrierte Pausezeit zwischen Abgabe und erneutem Erhalt des Buszugriffsrechts muss abgelaufen sein.

Sind alle Bedingungen erfüllt, wird dieser Busteilnehmer ab dem nächsten Bustakt der neue Busmaster. Da die Arbitrierungseinheiten der Busteilnehmer einen Ring bilden, ist mit dieser Methode eine Gleichbehandlung der Busteilnehmer und eine maximale Verzögerungszeit von Bus-Request zu Buszuteilung sichergestellt.

Sind weitere Prioritäten gefordert, ist für jede zusätzliche Priorität ein weiterer Prioritäts-Ring erforderlich. Ansonsten gelten obige Aussagen weiterhin, mit folgender Verallgemeinerung:

Damit ein Busteilnehmer, der einen Bus-Request einer gegebenen Priorität N an seine Arbitrierungseinheit gestellt hat, der neue Busmaster werden kann, müssen folgende Bedingungen erfüllt sein:
- an jedem der höherprioren Eingänge seiner Arbitrierungseinheit muss jeweils der Signalpegel für "Ring freigegeben" anliegen.
- der Busteilnehmer muss der Ringmaster dieser Prioritätsebene N sein.
- am niederprioren Eingang seiner Arbitrierungseinheit muss der Signalpegel für "Busfreigabe" anliegen.
- die parametrierte Pausezeit zwischen Abgabe und erneutem Erhalt des Buszugriffsrechts muss abgelaufen sein.

Sind alle Bedingungen erfüllt, wird dieser Busteilnehmer ab dem nächsten Bustakt der neue Busmaster.

Dieses Verfahren erfüllt alle Anforderungen an ein leistungsfähiges Arbitrierungsverfahren, bei einem gleichzeitig minimalen Planungs- und Projektierungsaufwand.

Der Einsatz des beschriebenen Arbitrierungsverfahren ist insbesondere bei der Echtzeit-Ethernet-Kommunikation im Feldbus-Bereich möglich.

Von besonderem Vorteil ist es darüber hinaus, dass die offenbarten Verfahren in Automatisierungssystemen, insbesondere bei und in Verpackungsmaschinen, Pressen, Kunststoffspritzmaschinen, Textilmaschinen, Druckmaschinen, Werkzeugmaschinen, Roboter, Handlingsystemen, Holzverarbeitungsmaschinen, Glasverarbeitungsmaschinen, Keramikverarbeitungsmaschinen sowie Hebezeugen eingesetzt bzw. verwendet werden können.

Im Weiteren werden bevorzugte Ausführungsbeispiele der Erfindung mit Bezugnahme auf die Zeichnungen näher erläutert. Es zeigen:
- Figur 1: Arbitrierung mit einer Priorität - Zustand nach Reset, Telnehmer 2 ist Busmaster,
- Figur 2: ein Flussdiagramm einer Ausführungsform eines erfindungsgemäßen Verfahrens mit einer Priorität,
- Figur 3: Arbitrierung mit einer Priorität - Teilnehmer 1 und 4 aktivieren Busrequest, Teilnehmer 4 wird Busmaster, mit Timing-Diagramm,
- Figur 4: Arbitrierung mit einer Priorität - Teilnehmer 4 deaktiviert Busrequest; Teilnehmer 1 wird Busmaster, mit Timing-Diagramm,
- Figur 5: Arbitrierung mit einer Priorität - Teilnehmer 1 deaktiviert Busrequest und bleibt Busmaster, mit Timing-Diagramm,
- Figur 6: Arbitrierung mit drei Prioritäten - Zustand nach Reset; Teilnehmer 2 ist Busmaster,
- Figur 7: eine Ausführungsform eines erfindungsgemäßen Verfahrens mit mehreren Prioritäten,
- Figur 8: Arbitrierung mit drei Prioritäten - Teilnehmer 3, 4 und 5 aktivieren Busrequests unterschiedlicher Priorität; Teilnehmer 5 wird Busmaster,
- Figur 9: Arbitrierung mit drei Prioritäten - Teilnehmer 5 deaktiviert Busrequest; Teilnehmer 4 wird Busmaster,
- Figur 10: Arbitrierung mit drei Prioritäten - Teilnehmer 4 deaktiviert Busrequest; Teilnehmer 3 wird Busmaster,
- Figur 11: Arbitrierung mit drei Prioritäten - Teilnehmer 4 und 6 aktivieren Busrequests unterschiedlicher Priorität; Teilnehmer 3 deaktiviert Busrequest; Teilnehmer 6 wird Busmaster,
- Figur 12: Arbitrierung mit drei Prioritäten und virtuellen Teilnehmern - Zustand nach Reset; Teilnehmer 2 ist Busmaster,
- Figur 13: eine Ausführungsform eines erfindungsgemäßen Verfahrens mit einer Arbitrierungseinheit als virtuellem Teilnehmer,
- Figur 14: Arbitrierung mit drei Prioritäten und virtuellen Teilnehmern - Teilnehmer 1, 3 und 4 aktivieren Busrequests unterschiedlicher Priorität; Teilnehmer 3 wird Busmaster,
- Figur 15: Arbitrierung mit drei Prioritäten und virtuellen Teilnehmern - Teilnehmer 2 aktiviert Busrequest; Teilnehmer 3 deaktiviert Busrequest; Teilnehmer 4 wird Busmaster,
- Figur 16: Arbitrierung mit drei Prioritäten und virtuellen Teilnehmern - Teilnehmer 3 aktiviert Busrequest; Teilnehmer 4 deaktiviert Busrequest; Teilnehmer 1 wird Busmaster,
- Figur 17: Arbitrierung mit drei Prioritäten und virtuellen Teilnehmern - Teilnehmer 1 deaktiviert Busrequest; Teilnehmer 3 wird Busmaster,
- Figur 18: Arbitrierung mit drei Prioritäten und virtuellen Teilnehmern - Teilnehmer 3 deaktiviert Busrequest; Teilnehmer 2 wird Busmaster,
- Figur 19: Arbitrierung mit drei Prioritäten und virtuellen Teilnehmern - Teilnehmer 2 deaktiviert Busrequest und bleibt Busmaster.

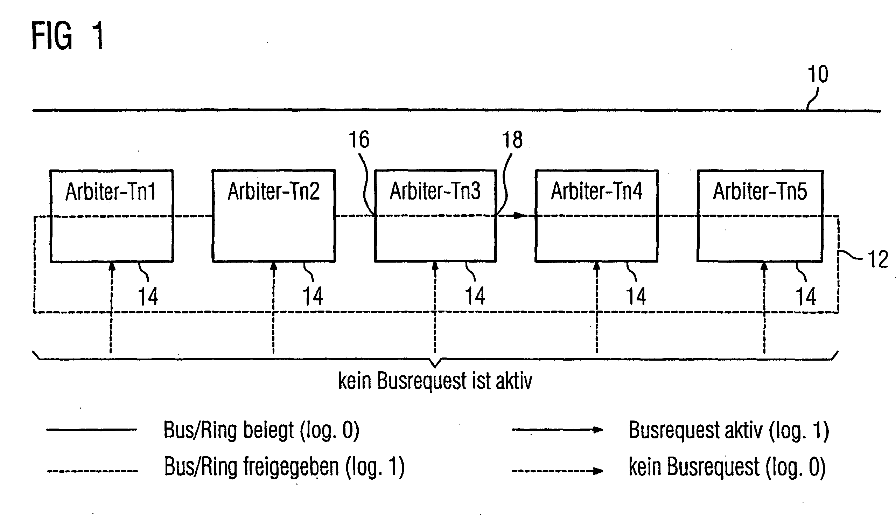

Figur 1 zeigt ein Blockdiagramm eines erfindungsgemäßen Kommunikationssystems. Das Kommunikationssystem beinhaltet einen Datenbus 10 auf den Teilnehmer Tn 1, Tn 2, Tn 3, Tn 4 und Tn 5 des Kommunikationssystems zugreifen können. Die Teilnehmer Tn 1 bis Tn 5 sind durch einen Arbitrierungsring 12 gekoppelt. Der Arbitrierungsring 12 hat eine Umlaufrichtung, die, in dem hier betrachteten Ausführungsbeispiel, der Uhrzeigersinn ist.

Die Figur 1 zeigt den Zustand nach Reset: Der Teilnehmer Tn 2 ist Busmaster und Ringmaster, solange keine Zugriffsanforderung, d. h. ein sogenannter Busrequest aktiviert wird. Ein Busrequest kann beispielsweise von einer Applikation eines Teilnehmers erzeugt werden. Unter "Busmaster" wird im Folgenden derjenige Teilnehmer verstanden, der auf den Datenbus 10 zugreifen darf.

Jeder der Teilnehmer Tn 1 bis Tn 5 hat ein Arbitrierungsmodul 14 mit einem Eingang 16 und einem Ausgang 18. An dem Eingang 16 kann das Signal "Bus/Ring belegt" oder "Bus/Ring freigegeben" empfangen werden. Das Signal an dem Eingang 16 wird im Allgemeinen unverändert an dem Ausgang 18 ausgegeben.

Nur wenn ein Teilnehmer die Rolle eines Ringmasters für den Arbitrierungsring 12 hat, kann dieser Teilnehmer, bei dem Signal "Bus/Ring belegt" an seinem Eingang 16, an seinem Ausgang 18 das Signal "Bus/Ring freigegeben" ausgeben. In der hier betrachteten Konfiguration sind der Busmaster und der Ringmaster identisch, da es nur einen Arbitrierungsring 12 gibt. In dem hier betrachteten Beispiel ist der Busmaster und der Ringmaster der Teilnehmer Tn 2.

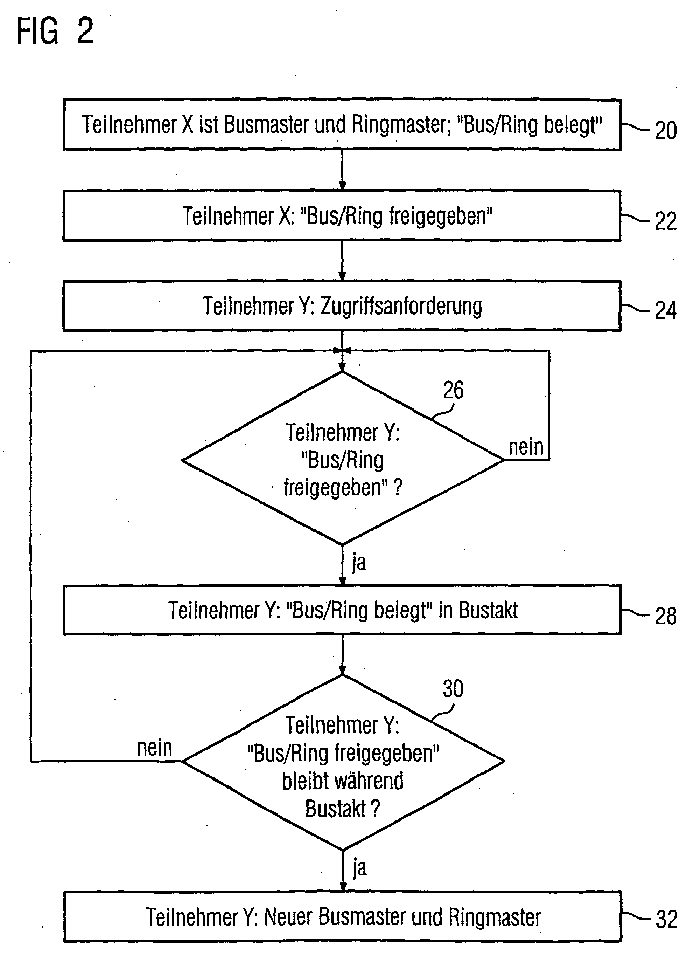

Das Flussdiagramm der Figur 2 veranschaulicht die Arbeitsweise des Kommunikationssystems der Figur 1. In dem Schritt 20 ist einer der Teilnehmer Tn X Busmaster und gleichzeitig Ringmaster. Der Teilnehmer Tn X hat aktuellen Zugriff auf den Datenbus 10, so dass auf dem Arbitrierungsring 12 das Signal "Bus/Ring belegt" umläuft.

In dem Schritt 22 möchte der Teilnehmer Tn X den Datenbus 10 freigeben. Der Grund hierfür kann sein, dass der Teilnehmer Tn X keinen Busrequest mehr hat oder dass eine vorgegebene maximale Zeit für die Belegung des Datenbusses abgelaufen ist. Da der Teilnehmer Tn X Ringmaster ist, kann er das Signal "Bus/Ring freigegeben" an seinem Ausgang 18 ausgeben, was in dem Schritt 22 erfolgt.

In dem Schritt 24 hat ein anderer der Teilnehmer Tn Y eine Zugriffsanforderung. Diese kann von einer Applikation des Teilnehmers Tn Y kommen. In dem Schritt 26 prüft der Teilnehmer Tn Y ob an seinem Eingang 16 das Signal "Bus/Ring freigegeben" anliegt. Ist dies nicht der Fall, so muss der Teilnehmer Tn Y so lange warten, bis dieses Signal an seinem Eingang 16 anliegt.

Sobald das Signal "Bus/Ring freigegeben" an dem Eingang 16 des Teilnehmers Tn Y anliegt, gibt der Teilnehmer Tn Y in dem Schritt 28 an seinem Ausgang 18 das Signal "Bus/Ring belegt" aus. Dies erfolgt beispielsweise zu Beginn eines Bustakts.

In dem Schritt 30 prüft der Teilnehmer Tn Y, ob das Signal "Bus/Ring freigegeben" am Ende des Bustakts noch an seinem Eingang 16 anliegt. Wenn dies der Fall ist, bedeutet dies, dass entweder kein anderer der Teilnehmer ein Signal "Bus/Ring belegt" auf den Arbitrierungsring 12 ausgegeben hat, nachdem das Signal "Bus/Ring freigegeben" anlag, oder dass ein anderer Teilnehmer zwar ein solches Signal "Bus/Ring belegt" ausgegeben hat, dieser Teilnehmer aber im Umlaufsinn des Arbitrierungsrings 12 von dem aktuellen Ringmaster weiter entfernt ist als der Teilnehmer Tn Y. Vorteilhafterweise wird die Länge des Bustakts im Wesentlichen gleich der Länge für den Umlauf eines Signals um den Arbitrierungsring 12 oder länger gewählt.

Wenn die Bedingung des Schritts 30 erfüllt wird, wird der Teilnehmer Tn Y in dem Schritt 32 neuer Busmaster und zugleich neuer Ringmaster für den Arbitrierungsring 12. Ist die Bedingung des Schritts 30 nicht erfüllt, so geht die Ablaufsteuerung des Teilnehmers Tn Y zurück zu dem Schritt 26.

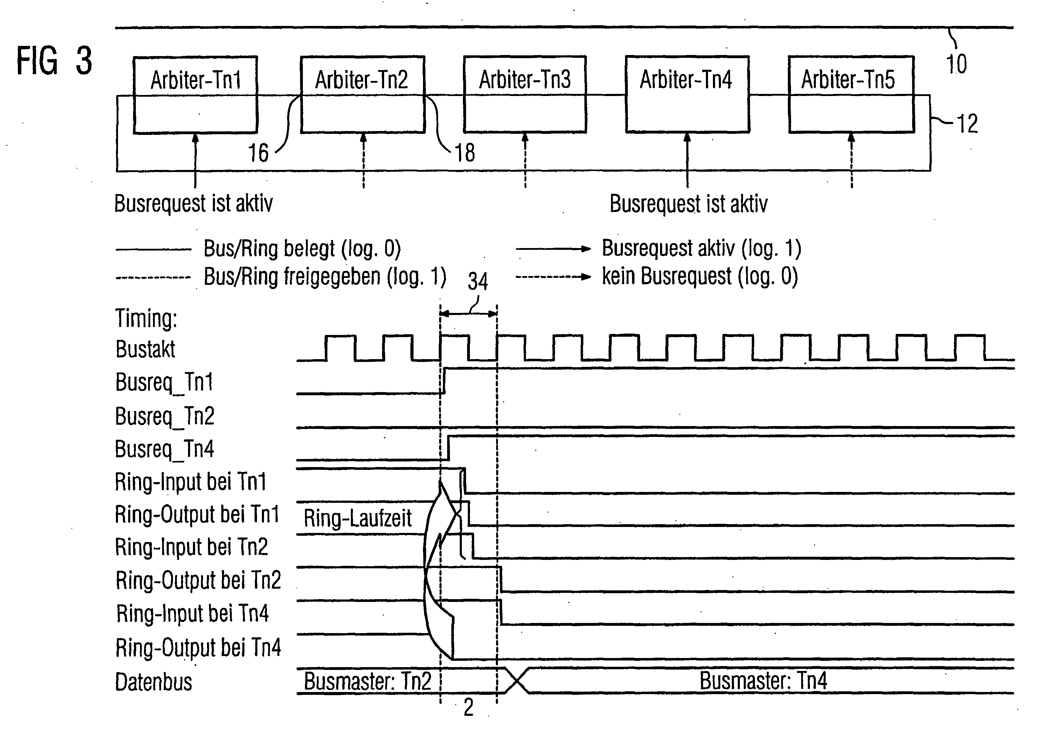

Die Figur 3 zeigt ein entsprechendes Timing-Diagramm. Zunächst ist der Teilnehmer Tn 2 Busmaster und Ringmaster des Arbitrierungsrings 12. Der Ring-Output an dem Ausgang 18 des Teilnehmers Tn 2 ist auf logisch 1, d. h. "Bus/Ring freigegeben". Zu Beginn des Bustakts 34 erhält der Teilnehmer Tn 1 eine Zugriffsanforderung auf den Datenbus 10, d. h. das Signal Busreq_Tn 1 geht von logisch 0 auf logisch 1; ebenso erhält der Teilnehmer Tn 4 eine Zugriffsanforderung auf den Datenbus 10, so dass auch das Signal Busreq_Tn 4 von logisch 0 auf logisch 1 geht.

Da das Signal "Bus/Ring freigegeben" auf dem Arbitrierungsring 12 umläuft und der Teilnehmer Tn 1 dies an seinem Eingang 16 empfängt, gibt der Teilnehmer Tn 1 daraufhin an seinem Ausgang 18, d. h. bei seinem Ring-Output, das Signal "Bus/Ring belegt". Ebenso verhält es sich für den Teilnehmer Tn 4.

Die von den Teilnehmern Tn 1 und Tn 4 ausgegebenen Signale "Bus/Ring belegt" beginnen dann im Uhrzeigersinn durch den Arbitrierungsring 12 über die einzelnen Teilnehmer zu propagieren. Zum Ende des Bustakts 34 prüfen die Teilnehmer Tn 1 und Tn 4 jeweils an deren Eingängen 16, ob das Signal an den jeweiligen Eingängen 16 noch "Bus/Ring freigegeben" ist.

Dies ist für den Teilnehmer Tn 4 der Fall, da dieser im Uhrzeigersinn näher an dem noch aktuellen Ringmaster Tn 2 in dem Arbitrierungsring 12 angeordnet ist. Am Eingang 16 des Teilnehmers Tn 1 liegt hingegen bereits "Bus/Ring belegt" an. Aufgrund dessen wird der Teilnehmer Tn 4 der neue Busmaster und gleichzeitig auch der neue Ringmaster des Arbitrierungsrings 12 und kann auf den Datenbus 10 zugreifen.

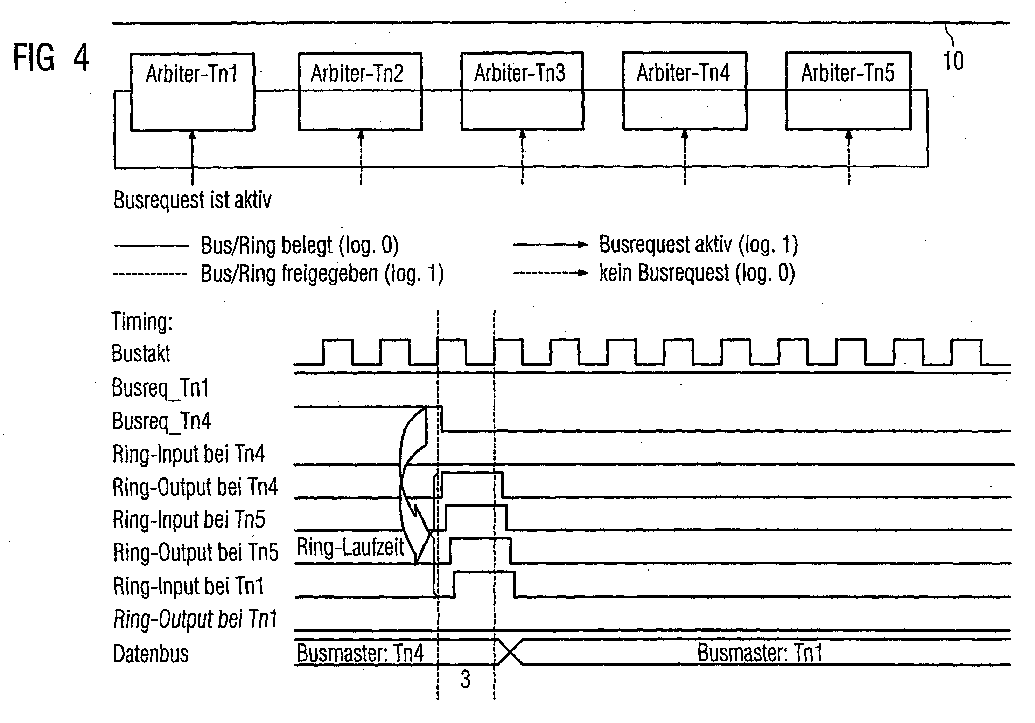

Die Figur 4 zeigt eine entsprechende Situation, in der der Teilnehmer Tn 4 seinen Busrequest deaktiviert, d. h. an seinem Ausgang 16 von "Bus/Ring belegt" auf "Bus/Ring freigegeben" zurückschaltet. Nachdem der Teilnehmer Tn 4 also seine Zugriffsanforderung abgearbeitet hat oder die maximale Zugriffszeit abgelaufen ist, kommt nunmehr der Teilnehmer Tn 1 "an die Reihe" und wird neuer Bus- und Ringmaster.

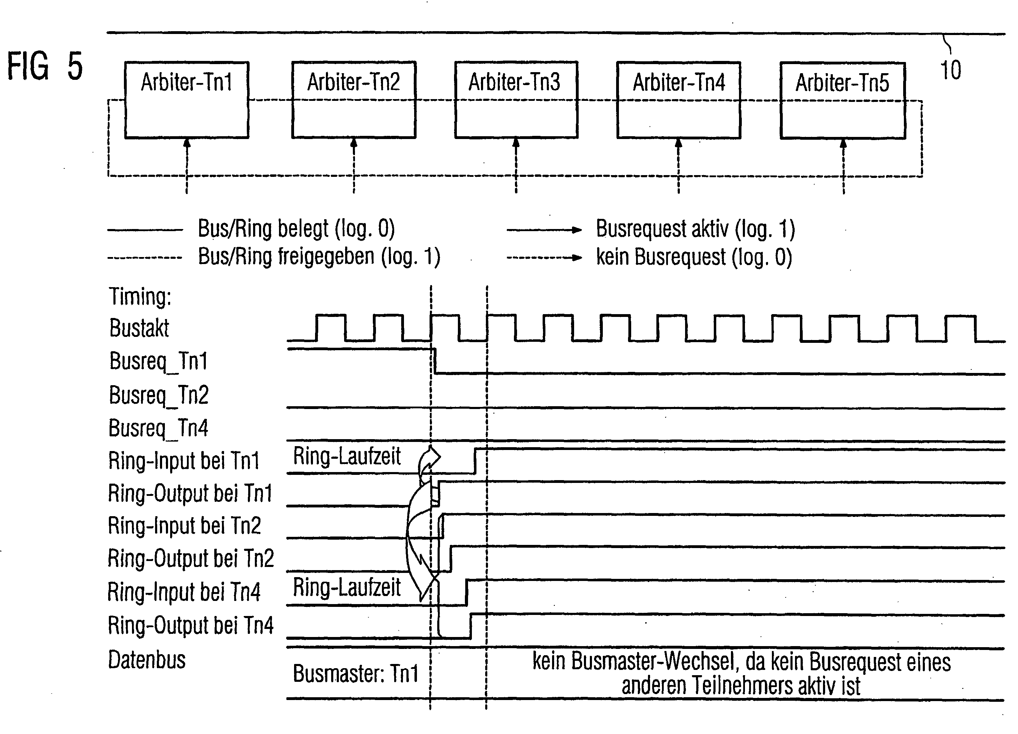

Die Figur 5 zeigt eine Situation, in der der bisherige Ring- und Busmaster Tn 1 seinen Busrequest deaktiviert und zunächst Bus- und Ringmaster bleibt, da kein Busrequest eines anderen Teilnehmers aktiv ist.

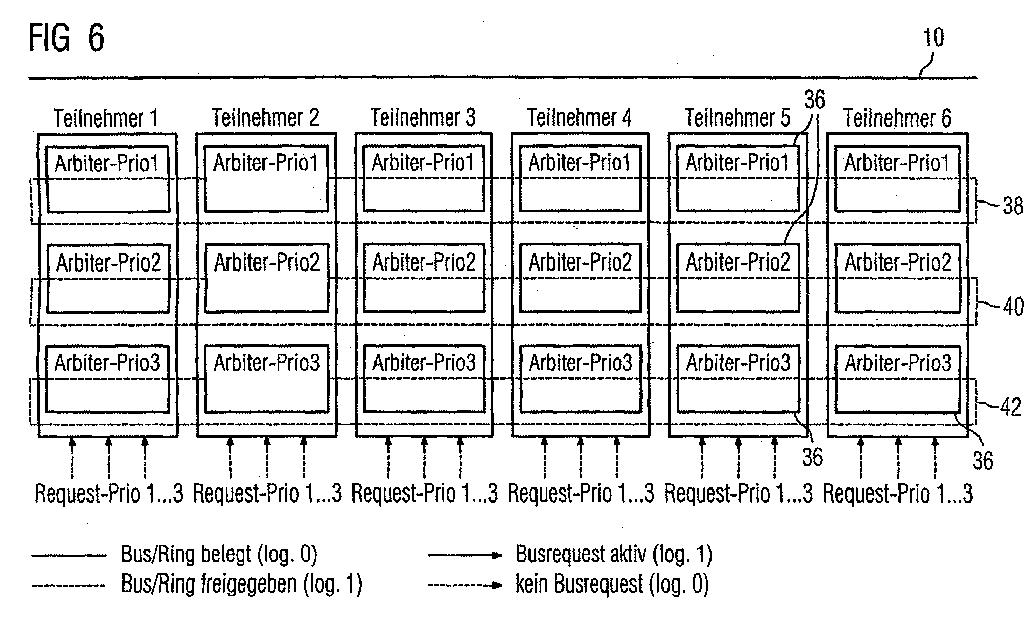

Die Figur 6 zeigt eine alternative Ausführungsform eines erfindungsgemäßen Kommunikationssystems mit mehreren Arbitrierungsringen.

Das Kommunikationssystem beinhaltet die Teilnehmer 1, 2, 3, 4, 5 und 6 sowie den Datenbus 10. Die Teilnehmer 1 bis 6 haben Arbitrierungsmodule 36, die durch Arbitrierungsringe 38, 40 und 42 miteinander gekoppelt sind. Der Arbitrierungsring 38 dient dabei zur Bearbeitung von Zugriffsanforderungen auf den Bus 10 mit der höchsten Priorität 1. Entsprechend dient der Arbitrierungsring 40 für Zugriffsanforderungen der Priorität 2 und der Arbitrierungsring 42 für Zugriffsanforderungen der Priorität 3.

Die Figur 6 zeigt den Zustand dieses Kommunikationssystems nach einem Reset, wobei Teilnehmer 2 der Busmaster und gleichzeitig der Ringmaster der Arbitrierungsringe 38, 40 und 42 ist.

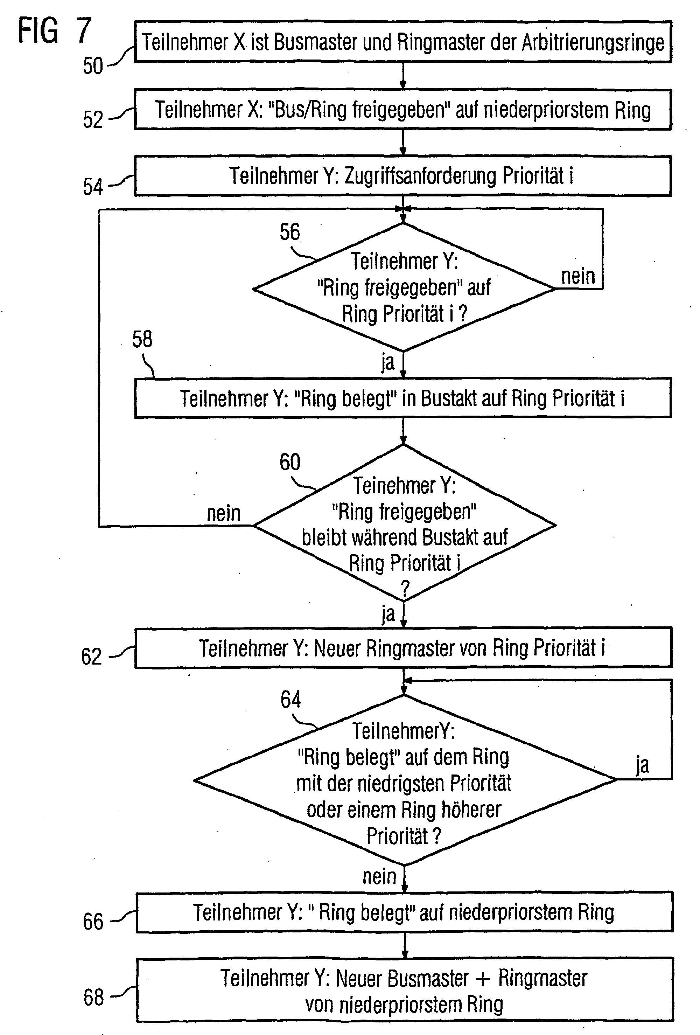

Das Flussdiagramm der Figur 7 veranschaulicht die Arbeitsweise eines Kommunikationssystems vom Typ, wie es in der Figur 6 dargestellt ist, mit einer Anzahl von N-Prioritäten und einer Anzahl von N-Arbitrierungsringen.

In dem Schritt 50 ist einer der Teilnehmer X des Kommunikationssystems Busmaster und Ringmaster der Arbitrierungsringe. Dies ist der initiale Zustand nach einem Reset. In dem Schritt 52 legt der Teilnehmer X das Signal "Bus/Ring freigegeben" auf den niederpriorsten Ring des Kommunikationssystems, d. h. in dem Beispiel der Figur 6 auf den Arbitrierungsring 42. Dies entspricht dem Schritt 22 der Ausführungsform der Figur 2.

In dem Schritt 54 hat der Teilnehmer Y des Kommunikationssystems eine Zugriffsanforderung auf den Datenbus 10 mit der Priorität i, wobei 1 ≤ i ≤ N. Dieser Schritt entspricht dem Schritt 24 in der Ausführungsform der Figur 2.

In dem Schritt 56 prüft der Teilnehmer Y, ob das Signal "Ring freigegeben" auf dem Arbitrierungsring, der der Priorität i zugeordnet ist, an dem Eingang des Teilnehmers Y anliegt. Ist das nicht der Fall, so muss der Teilnehmer Y so lange warten, bis diese Bedingung erfüllt ist. Wenn die Bedingung jedoch erfüllt ist, so gibt der Teilnehmer Y, beispielsweise am Anfang eines Bustakts, das Signal "Ring belegt" an seinem Ausgang auf den Arbitrierungsring der Priorität i aus.

In dem Schritt 60 prüft der Teilnehmer Y, ob das Signal "Ring freigegeben" an dem Eingang des Teilnehmers Y für den Arbitrierungsring der Priorität i am Ende des Bustakts noch anliegt. Ist dies nicht der Fall, so geht die Ablaufsteuerung des Teilnehmers Y zurück zu dem Schritt 56.

Ist die Bedingung erfüllt, so wird danach der Schritt 62 ausgeführt. Die Schritte 56, 58 und 60 entsprechen den Schritten 26, 28 und 30 der Ausführungsform der Figur 2, wobei der Arbitrierungsring, der der Priorität i zugeordnet ist, an die Stelle des einzigen Arbitrierungsrings 12 (vgl. Figur 1) tritt.

In dem Schritt 62 wird der Teilnehmer Y neuer Ringmaster des Arbitrierungsrings der Priorität i. Damit ist der Teilnehmer Y aber noch nicht zum Busmaster geworden.

Dazu muss zunächst in dem Schritt 64 von dem Teilnehmer Y geprüft werden, ob das Signal "Ring belegt" auf dem Arbitrierungsring mit der niedrigsten Priorität N oder einem Arbitrierungsring mit einer Priorität, die größer ist als die Priorität i, an einem der Arbitrierungsringeingänge des Teilnehmers Y anliegt. Wenn dies der Fall ist, muss der Teilnehmer Y so lange warten, bis das Signal "Ring belegt" durch "Ring freigegeben" ersetzt wird.

Dann wird der Teilnehmer Y in dem Schritt 66 das Signal "Ring belegt" auf dem niederpriorsten Ring ausgeben, um dann in dem Schritt 68 neuer Busmaster und Ringmaster des niederpriorsten Ring zu werden.

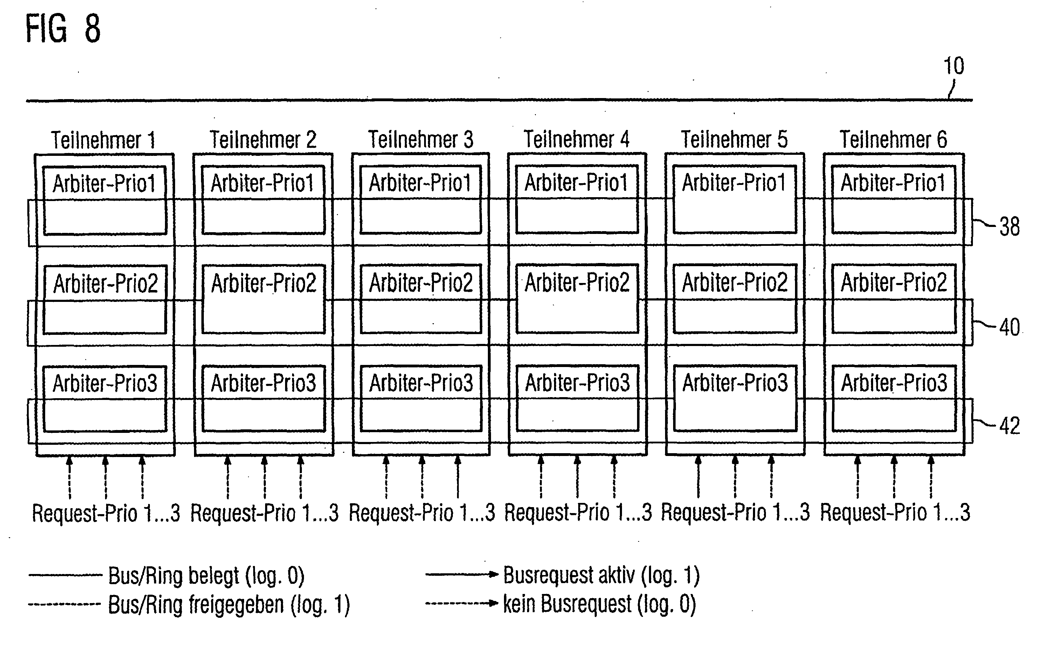

Die Figur 8 zeigt den Zustand des Kommunikationssystems der Figur 6, wenn der Teilnehmer 2 zunächst Busmaster ist und der Teilnehmer 3 eine Zugriffsanforderung auf den Datenbus 10 mit der Priorität 3 hat ("Request-Prio 3") und ferner der Teilnehmer 4 einen Request-Prio 2 hat und der Teilnehmer 5 einen Request-Prio 1 hat. In dieser Situation wird der Teilnehmer 5 neuer Ringmaster des Arbitrierungsrings 38 der Priorität 1; der Teilnehmer 4 wird neuer Ringmaster des Arbitrierungsrings 40 der Priorität 2 und der Teilnehmer 5 wird neuer Ringmaster des Arbitrierungsrings 42 der Priorität 3, obwohl bei Teilnehmer 3 ein Request-Prio 3 aktiv ist.

Teilnehmer 3 könnte nur dann neuer Ringmaster der Priorität 3 werden, wenn keine Zugriffsanforderung mit einer höheren Priorität aktiv ist. Danach wird immer der Teilnehmer Ringmaster der Priorität 3, der den Busrequest mit der höchsten Priorität gestellt hat. Jeder Ringmaster der Priorität 3 ist gleichzeitig auch Datenbus-Master. Deshalb wird der Teilnehmer 5 der neue Busmaster.

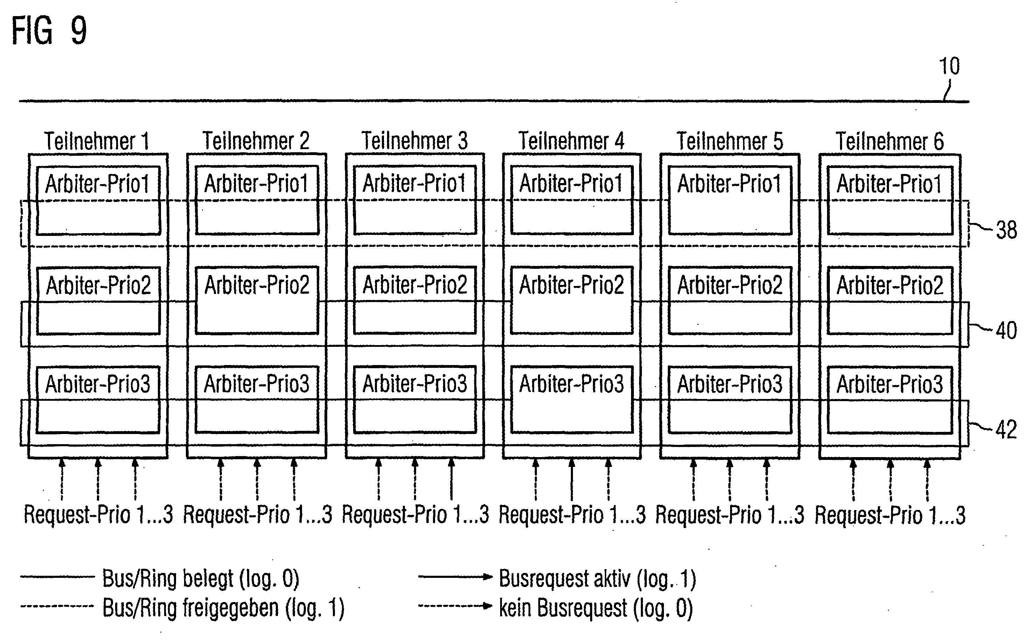

Die Figur 9 zeigt den Zustand des Kommunikationssystems ausgehend von dem Zustand der Figur 8, d. h. der Ausgangspunkt, dass der Teilnehmer 5 Busmaster ist. Der Teilnehmer 5 deaktiviert seinen Request-Prio 1, wobei der Teilnehmer 3 einen Request-Prio 3 und der Teilnehmer 4 einen Request-Prio 2 hat. In diesem Fall bleibt der Teilnehmer 5 Ringmaster des Arbitrierungsrings 38 der Priorität 1, da kein anderer Teilnehmer eine Zugriffsanforderung auf den Datenbus 10 der Priorität 1 aktiviert hat. Ferner bleibt der Teilnehmer 4 Ringmaster des Arbitrierungsrings 40 der Priorität 2 und wird neuer Ringmaster des Arbitrierungsrings 42 der Priorität 3, obwohl bei Teilnehmer 3 ein Request-Prio 3 aktiv ist.

Teilnehmer 3 könnte nur dann neuer Ringmaster der Priorität 3 werden, wenn kein Request einer höheren Priorität aktiv ist. Bei diesem Verfahren wird immer der Teilnehmer Ringmaster der Priorität 3, der den Busrequest mit der höchsten Priorität gestellt hat. Jeder Ringmaster der Priorität 3 ist gleichzeitig auch Datenbus-Master. Deshalb wird jetzt Teilnehmer 4 der neue Busmaster.

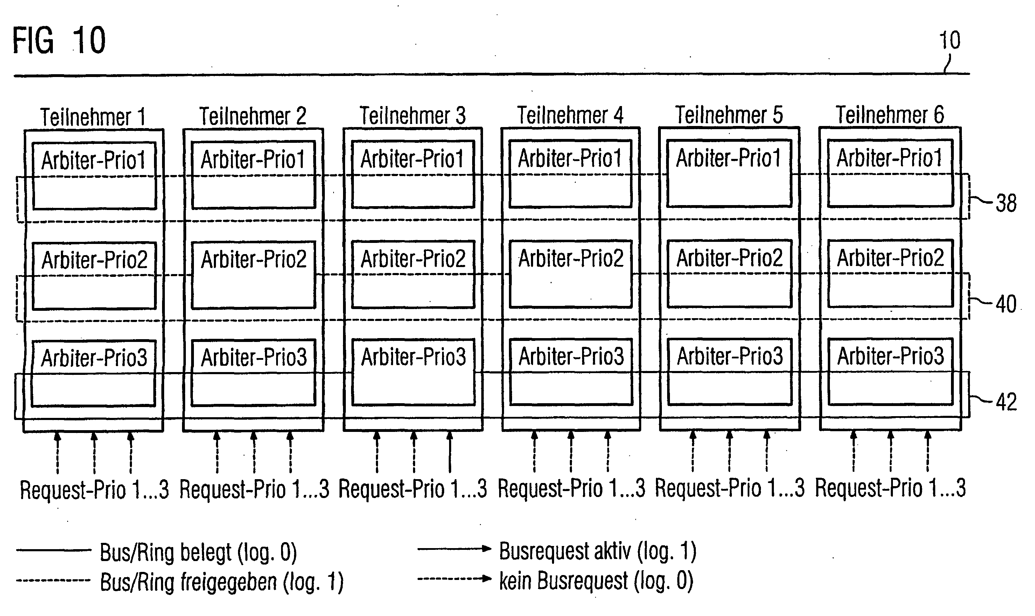

Die Figur 10 zeigt den Zustand des Kommunikationssystems, wobei der Teilnehmer 4 der alte Busmaster ist. Dieser deaktiviert seinen Request-Prio 2. Der Teilnehmer 3 hat einen Request-Prio 3. In dieser Situation bleibt der Teilnehmer 5 Ringmaster des Arbitrierungsrings 38 der Priorität 1, da kein anderer Teilnehmer einen Request der Priorität 1 aktiviert hat. Der Teilnehmer 4 bleibt Ringmaster des Arbitrierungsrings 40 der Priorität 2, da kein anderer Teilnehmer einen Request der Priorität 2 aktiviert hat. Der Teilnehmer wird neuer Ringmaster des Arbitrierungsrings 42 der Priorität 3, da kein Request einer höheren Priorität aktiv ist.

Bei diesem Verfahren wird immer der Teilnehmer Ringmaster der Priorität 3, der den Busrequest mit der höchsten Priorität gestellt hat. Jeder Ringmaster der Priorität 3 ist gleichzeitig auch Datenbus-Master. Deshalb wird jetzt der Teilnehmer 3 der neue Busmaster.

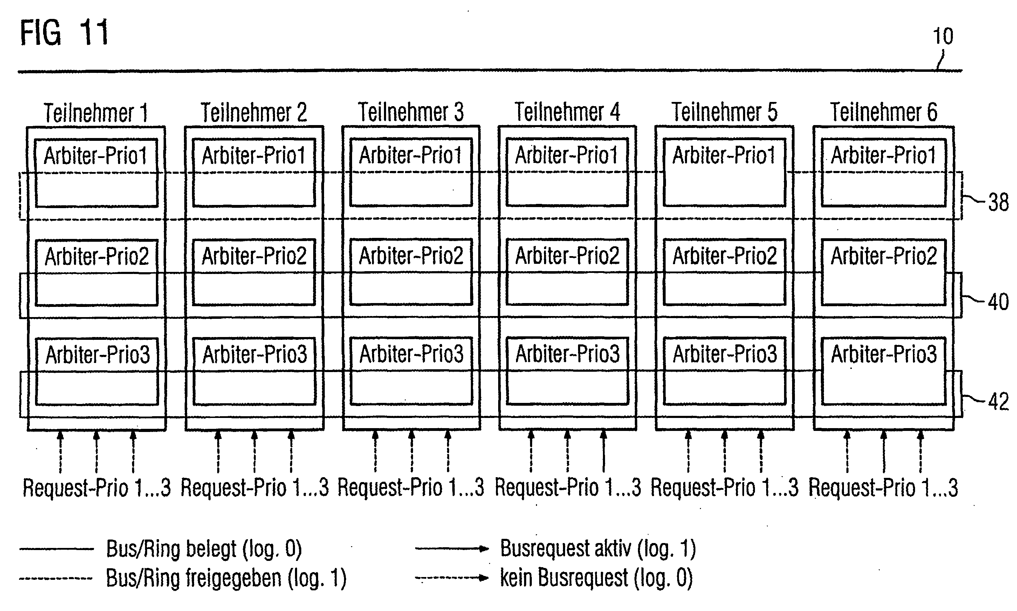

Die Figur 11 zeigt den Zustand des Kommunikationssystems, in dem der Teilnehmer 4 einen Request-Prio 3 aktiviert und der Teilnehmer 6 seinen Request-Prio 2 aktiviert. In dieser Situation wird der Teilnehmer 6 sofort der neue Ringmaster des Arbitrierungsrings der Priorität 2. Dies ist unabhängig vom Zeitpunkt, zu dem der bisherige Busmaster, d. h. der Teilnehmer 3, seinen Busrequest deaktiviert.

Der Teilnehmer 6 kann jedoch frühestens Busmaster werden, wenn der bisherige Busmaster, d. h. der Teilnehmer 3, den Busrequest deaktiviert. Die Priorität des Busrequests vom Busmaster spielt hierbei keine Rolle.

Sobald der bisherige Busmaster, Teilnehmer 3, den Request-Prio 3 deaktiviert, wird Teilnehmer 6 der neue Ringmaster der Priorität 3 und somit neuer Busmaster.

Teilnehmer 4 wird trotz aktiviertem Request-Prio 3 nicht der Ringmaster der Priorität 3, da ein Request einer höheren Priorität aktiv ist. Nachdem der bisherige Busmaster, Teilnehmer 3, seinen Busrequest deaktiviert hat, ergibt sich die Situation in Figur 11.

Aktiviert dagegen z.B. Teilnehmer 2 den Request-Prio 3, bevor der aktuelle Busmaster Teilnehmer 6 bereit zur Busabgabe ist (d.h. seinen Busrequest deaktiviert), wird Teilnehmer 2 der neue Ringmaster der Priorität 3 und somit neuer Busmaster, wenn Teilnehmer 6 den Busrequest deaktiviert und zu diesem Zeitpunkt kein höher priorer Request eines anderen Teilnehmers aktiviert ist. Teilnehmer 4 hat zwar früher als Teilnehmer 2 Busrequest-Prio 3 aktiviert, wurde jedoch beim Busmaster-Wechsel von Teilnehmer 3 nach Teilnehmer 6 übersprungen.

Aktiviert z.B. Teilnehmer 5 Busrequest-Prio 1 oder Busrequest-Prio 2 bevor der aktuelle Busmaster, Teilnehmer 2, bereit zur Busabgabe ist, wird beim nächsten Busmaster-Wechsel Teilnehmer 4 wieder nicht berücksichtigt. Der Grund, dass beim Busmaster-Wechsel ein Teilnehmer, der den niederpriorsten Busrequest aktiviert, nicht berücksichtigt wird, ist der, dass der Ringmaster dieser niedrigsten Priorität in diesem Verfahren immer auch der Busmaster ist.

Um diesen Nachteil, die Nicht-Berücksichtigung eines Teilnehmers beim Busmaster-Wechsel zu vermeiden, ist das oben beschriebene Verfahren so zu modifizieren, dass zusätzlich zu den N Prioritätsringen ein Busmaster-Ring eingeführt wird. Bei 3 Prioritäten sind somit 4 Ringe notwendig: 3 Prioritätsringe und 1 Busmaster-Ring. Im Gegensatz zum oben beschriebenen Verfahren verhält sich der niederpriorste Ring analog zu den höher prioren Ringen. Busmaster ist in diesem Verfahren der Ringmaster des Busmaster-Rings.

Vorteil der beiden vorgestellten Verfahren ist die Minimierung der Wartezeit eines Teilnehmers, der einen hochprioren Busrequest gestellt hat, auf die Buszuteilung. Nachteil beider Verfahren ist die Möglichkeit von langen Wartezeiten bei Teilnehmern, die einen niederprioren Busrequest gestellt haben, wenn gleichzeitig viele hochpriore Busrequests von anderen Teilnehmern anstehen.

Ein weiteres Arbitrierungsverfahren, das auf der Ringstruktur basiert, besitzt die Vorteile der beiden obigen Verfahren, bei gleichzeitiger Verringerung von deren Nachteilen.

Dieses Arbitrierungsverfahren ist gekennzeichnet durch
- N Prioritätsringe, die analog zu den oben beschriebenen funktionieren, wobei N ≥ 2 ist,
- einen virtuellen Teilnehmer im Prioritätsring (N-1), der die Teilnehmer im Prioritätsring der Priorität N repräsentiert. N ist die niedrigste Priorität,
- einen virtuellen Teilnehmer im Prioritätsring (N-2), der die Teilnehmer im Prioritätsring der Priorität (N-1) repräsentiert,
- einen virtuellen Teilnehmer im Prioritätsring (N-3), der die Teilnehmer im Prioritätsring der Priorität (N-2) repräsentiert,
- etc.
- einen virtuellen Teilnehmer im Prioritätsring 1, der die Teilnehmer im Prioritätsring der Priorität 2 repräsentiert,
- jeder virtuelle Teilnehmer eines Arbitrierungsringes muss immer dann, wenn ein Teilnehmer des repräsentierten Ringes zur Busabgabe bereit ist, einen Teilnehmer seiner oder einer höheren Prioritätsebene das Buszugriffsrecht überlassen,
- Datenbus-Master ist immer der Ringmaster des Arbitrierungsringes mit der höchsten Priorität.

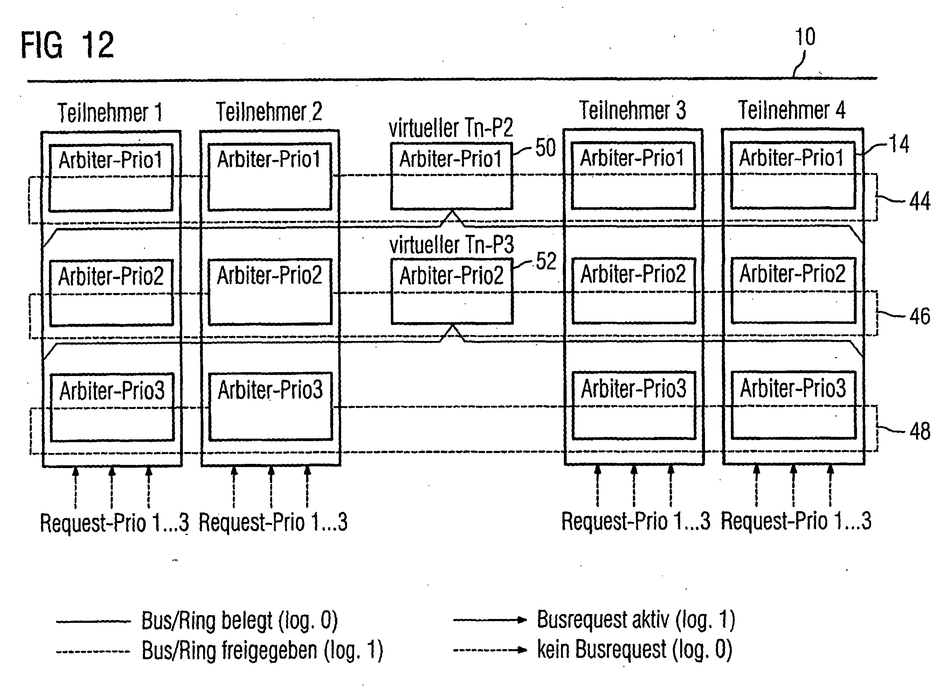

Die Figur 12 zeigt ein Blockdiagramm eines Ausführungsbeispiels eines solchen Kommunikationssystems mit einem Arbitrierungsverfahren mit N = 3, d. h. für drei Prioritäten und drei Arbitrierungsringe.

Der Arbitrierungsring 44 ist der Priorität 1 zugeordnet und verbindet die Arbitrierungsmodule 14 der Priorität 1 der Teilnehmer miteinander sowie das Arbitrierungsmodul 50 einer Arbitrierungseinheit, die im Weiteren als virtueller Teilnehmer bezeichnet wird. Das Arbitrierungsmodul 50 repräsentiert die Arbitrierungsmodule 14 der Priorität 2 in dem Arbitrierungsring 44 der Priorität 1. Wenn eine Zugriffsanforderung auf den Datenbus mit der Priorität 2 in einem der Teilnehmer vorliegt, so wird dies von dem Arbitrierungsmodul 50 in dem Arbitrierungsring 44 der Priorität 1 durch eine Zugriffsanforderung mit der Priorität 1 repräsentiert.

Entsprechend verhält es sich mit dem Arbitrierungsmodul 52 in dem Arbitrierungsring 46, welches Zugriffsanforderungen der Teilnehmer mit der Priorität 3 in dem Arbitrierungsring 46 der Priorität 2 repräsentiert.

Datenbusmaster ist immer der Ringmaster des Arbitrierungsrings mit der höchsten Priorität. Beim Ringmasterwechsel gelten pro Arbitrierungsring weiterhin die entsprechenden Timing-Diagramme der Figuren 3 bis 5.

Die Figur 12 zeigt den Zustand nach Reset: Der Teilnehmer 2 ist Busmaster, solange kein Busrequest aktiviert wird.

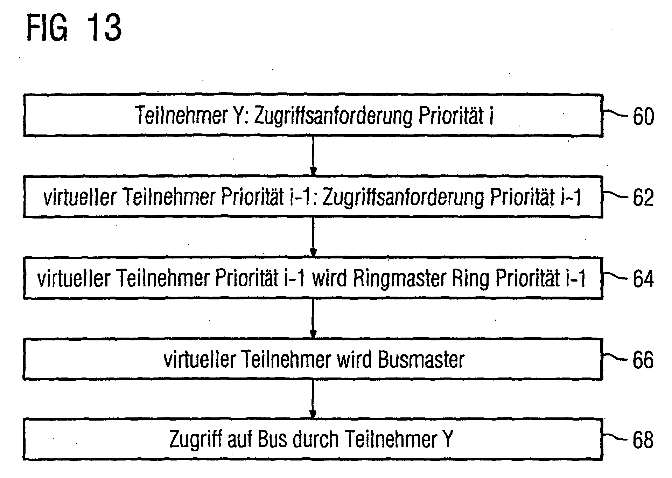

Die Figur 13 veranschaulicht anhand eines Flussdiagramms die Arbeitsweise eines Kommunikationssystems vom Typ der Figur 12. In dem Schritt 60 hat einer der Teilnehmer Y eine Zugriffsanforderung auf den Datenbus mit der Priorität i. In dem Schritt 62 wird diese Zugriffsanforderung von dem virtuellen Teilnehmer der Priorität i-1 in dem Arbitrierungsring der Priorität i-1 durch eine entsprechende Zugriffsanforderung der Priorität i-1 repräsentiert.

In dem Schritt 64 wird der virtuelle Teilnehmer der Priorität i-1 Ringmaster in dem Arbitrierungsring der Priorität i-1. Ferner wird der virtuelle Teilnehmer auch Busmaster (Schritt 66), so dass der Teilnehmer Y in dem Schritt 68 auf den Bus zugreifen kann.

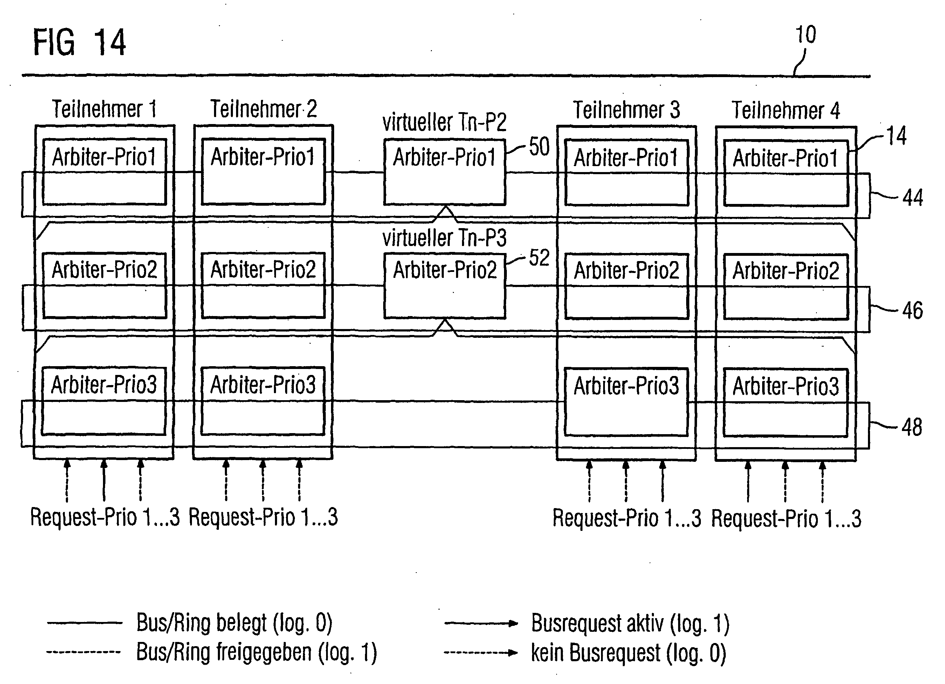

Die Figur 14 zeigt den Zustand des Kommunikationssystems, wenn zunächst der Teilnehmer 2 der alte Busmaster ist. Im selben Bustakt aktiviert der Teilnehmer 3 ein Request-Prio 3, der Teilnehmer 1 ein Request-Prio 2 und der Teilnehmer 4 ein Request-Prio 1. Daraufhin wird der Teilnehmer 3 neuer Ringmaster des Arbitrierungsrings 48 der Priorität 3; der virtuelle Teilnehmer mit dem Arbitrierungsmodul 52 wird neuer Ringmaster des Arbitrierungsrings 46 der Priorität 2; der virtuelle Teilnehmer mit dem Arbitrierungsmodul 50 wird neuer Ringmaster des Arbitrierungsrings 44 der Priorität 1 und der Teilnehmer 3 erhält schließlich den Zugriff auf den Datenbus 10.

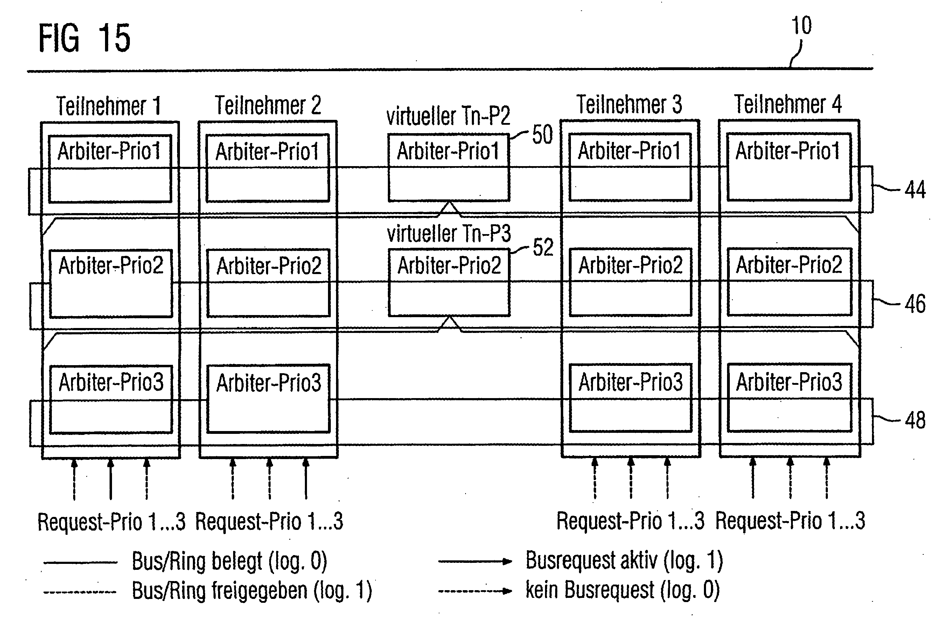

In der Figur 15 ist der Teilnehmer 3 aktueller Busmaster. Der Teilnehmer 2 aktiviert Request-Prio 3.

Damit sind folgende Busrequests aktiv, wenn der aktuelle Busmaster Teilnehmer 3 bereit zum Busmaster-Wechsel ist:
- Teilnehmer 2: Request-Prio 3 ist aktiv;
- Teilnehmer 1: Request-Prio 2 ist aktiv;
- Teilnehmer 4: Request-Prio 1 ist aktiv.

⇒ Teilnehmer 2 wird neuer Ringmaster des Arbitrierungsrings der Priorität 3;
⇒ Teilnehmer 1 wird neuer Ringmaster des Arbitrierungsrings der Priorität 2;
⇒ Teilnehmer 4 wird neuer Ringmaster des Arbitrierungsrings der Priorität 1;
⇒ Teilnehmer 4 wird der neue Datenbus-Master.

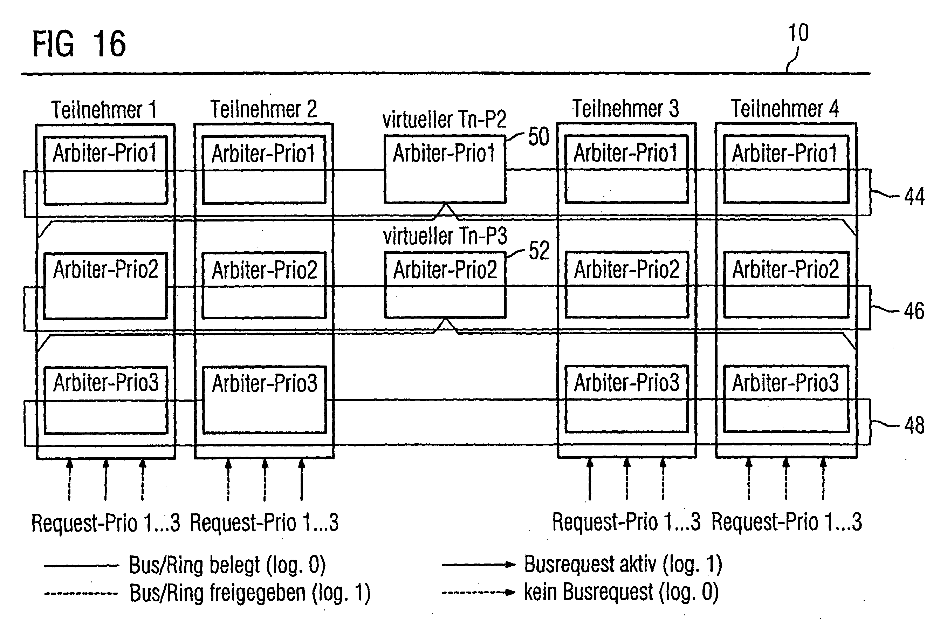

Bei Figur 16 ist Teilnehmer 4 aktueller Busmaster; Teilnehmer 3 aktiviert Request-Prio 1
Damit sind folgende Busrequests aktiv, wenn der aktuelle Busmaster Teilnehmer 4 bereit zum Busmaster-Wechsel ist:
- Teilnehmer 2: Request-Prio 3 ist aktiv;
- Teilnehmer 1: Request-Prio 2 ist aktiv;
- Teilnehmer 3: Request-Prio 1 ist aktiv.

⇒ Teilnehmer 2 bleibt Ringmaster des Arbitrierungsrings der Priorität 3;
⇒ Teilnehmer 1 bleibt Ringmaster des Arbitrierungsrings der Priorität 2;
⇒ virtueller Teilnehmer-P2 wird neuer Ringmaster des Arbitrierungsrings der Priorität 1;
⇒ Teilnehmer 1 wird der neue Datenbus-Master.

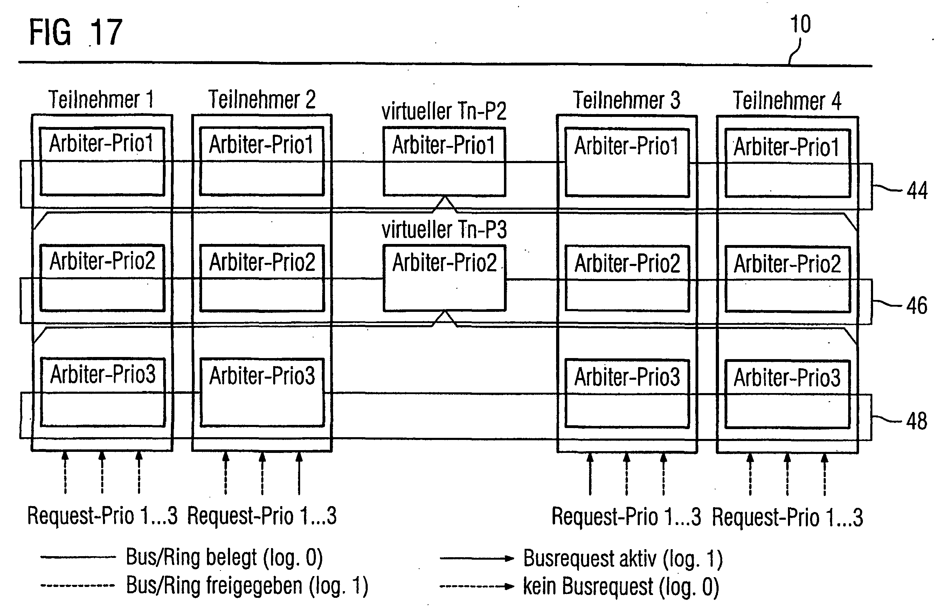

Bei Figur 17 ist Teilnehmer 1 aktueller Busmaster:

Damit sind folgende Busrequests aktiv, wenn der aktuelle Busmaster Teilnehmer 1 bereit zum Busmaster-Wechsel ist:
- Teilnehmer 2: Request-Prio 3 ist aktiv;
- Teilnehmer 3: Request-Prio 1 ist aktiv.

⇒ Teilnehmer 2 bleibt Ringmaster des Arbitrierungsrings der Priorität 3;
⇒ virtueller Teilnehmer-P3 wird neuer Ringmaster des Arbitrierungsrings der Priorität 2;
⇒ Teilnehmer 3 wird neuer Ringmaster des Arbitrierungsrings der Priorität 1;
⇒ Teilnehmer 3 wird der neue Datenbus-Master.

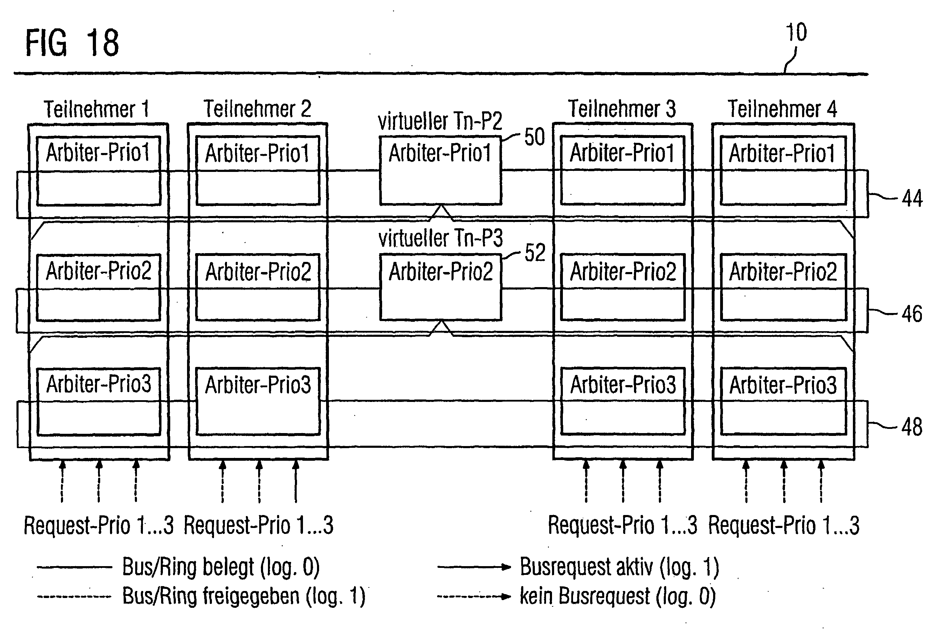

Bei Figur 18 ist Teilnehmer 3 aktueller Busmaster:

Damit sind folgende Busrequests aktiv, wenn der aktuelle Busmaster Teilnehmer 3 bereit zum Busmaster-Wechsel ist:
- Teilnehmer 2: Request-Prio 3 ist aktiv.

⇒ Teilnehmer 2 bleibt Ringmaster des Arbitrierungsrings der Priorität 3;
⇒ virtueller Teilnehmer-P3 bleibt Ringmaster des Arbitrierungsrings der Priorität 2;
⇒ virtueller Teilnehmer-P2 wird neuer Ringmaster des Arbitrierungsrings der Priorität 1;
⇒ Teilnehmer 2 wird der neue Datenbus-Master.

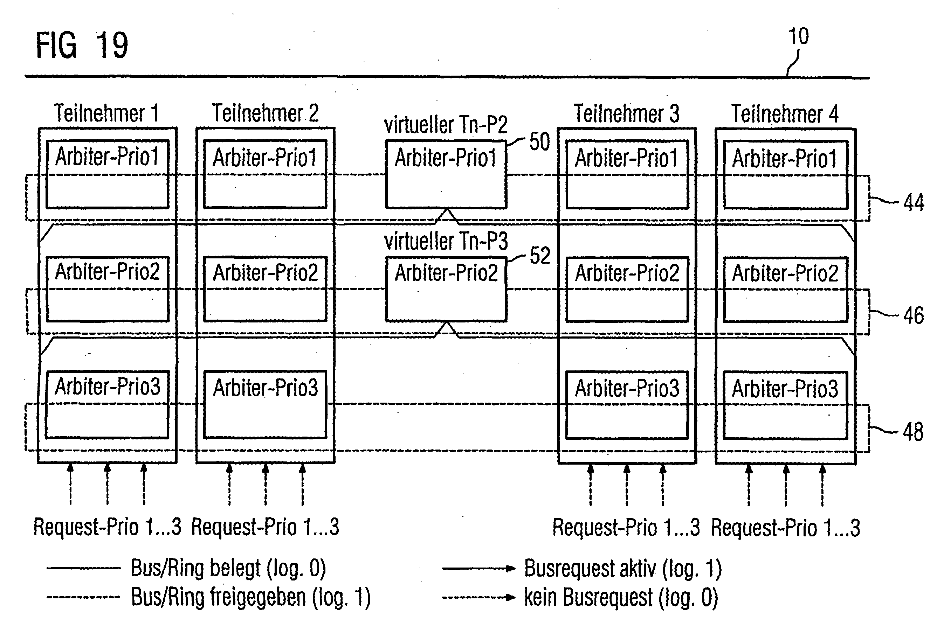

Bei Figur 19 ist Teilnehmer 2 aktueller Busmaster:
Damit sind keine Busrequests aktiv, wenn der aktuelle Busmaster Teilnehmer 3 bereit zum Busmaster-Wechsel ist:
⇒ Teilnehmer 2 bleibt Ringmaster des Arbitrierungsrings der Priorität 3;
⇒ virtueller Teilnehmer-P3 bleibt Ringmaster des Arbitrierungsrings der Priorität 2;
⇒ virtueller Teilnehmer-P2 bleibt Ringmaster des Arbitrierungsrings der Priorität 1;
⇒ Teilnehmer 2 bleibt Datenbus-Master, bis ein anderer Teilnehmer einen Busrequest aktiviert.

## Patentansprüche

1. Verfahren zur Arbitrierung eines Zugriffs auf einen Datenbus zwischen Teilnehmern (Tn1, Tn2,...), wobei die Teilnehmer durch zumindest einen Arbitrierungsring (12; 38, 40, 42, 44, 46, 48) gekoppelt sind, mit folgenden Schritten:
a) Anforderung des Zugriffs eines ersten der Teilnehmer,
b) Prüfung, ob ein erstes Signal zur Anzeige, dass einer der Arbitrierungsringe freigegeben ist, an einem Eingang (16) des ersten Teilnehmers anliegt,
c) Ausgabe (18) eines zweiten Signals durch den ersten Teilnehmer, wenn das erste Signal anliegt,
d) Prüfung, ob das erste Signal an dem Eingang des ersten Teilnehmers am Ende eines vorgegebenen Zeitintervalls noch anliegt,
e) Zugriff des ersten Teilnehmers, wenn das erste Signal am Ende des vorgegebenen Zeitintervalls noch anlag,
**dadurch gekennzeichnet, dass** die Teilnehmer durch eine Anzahl von Arbitrierungsringen (12, 38, 40, 42, 44, 46, 48) gekoppelt sind, und jedem Arbitrierungsring eine Priorität zugeordnet ist.

2. Verfahren nach Anspruch 1, wobei die Anforderung des Zugriffs eines ersten der Teilnehmer mit einer ersten Priorität erfolgt, und die Prüfung dahingehend erfolgt, ob ein erstes Signal zur Anzeige, dass der der ersten Priorität zugeordnete Arbitrierungsring freigegeben ist, an dem Eingang (16) des ersten Teilnehmers anliegt, und wobei die Abgabe (18) des zweiten Signals auf dem der ersten Priorität zugeordneten Arbitrierungsring erfolgt, und mit den weiteren Schritten:
- Prüfung, ob das zweite Signal an einem Eingang des Teilnehmers für den niederpriorsten Arbitrierungsring oder an einem Eingang des Teilnehmers für einen Arbitrierungsring, der einer höheren Priorität als der ersten Priorität zugeordnet ist, anliegt,
- Ausgabe des zweiten Signals auf den niederpriorsten Ring,
- Zugriff des ersten Teilnehmers.

3. Verfahren nach Anspruch 2, mit einem virtuellen Teilnehmer (50, 52) zur Repräsentierung von Zugriffsanforderungen der Teilnehmer einer zweiten Priorität in einem Arbitrierungsring, der einer höheren dritten Priorität zugeordnet ist.

4. Verfahren nach Anspruch 1, 2 oder 3, wobei es sich bei dem vorgegebenen Zeitintervall um einen Bustakt des Datenbusses handelt.

5. Teilnehmer für den Zugriff auf einen Datenbus (10) mit:
a) Mitteln zur Anforderung eines Zugriffs,
b) Mitteln zur Prüfung, ob ein erstes Signal zur Anzeige, dass einer der Arbitrierungsringe freigegeben ist, an einem Eingang (16) des ersten Teilnehmers anliegt,
c) Mitteln zur Ausgabe (18) eines zweiten Signals durch den ersten Teilnehmer, wenn das erste Signal anliegt,
d) Mitteln zur Prüfung, ob das erste Signal an dem Eingang des ersten Teilnehmers am Ende eines vorgegebenen Zeitintervalls noch anliegt,
e) Mitteln zum Zugriff des ersten Teilnehmers, wenn das erste Signal am Ende des vorgegebenen Zeitintervalls noch anlag.
**dadurch gekennzeichnet, dass** die Teilnehmer durch eine Anzahl von Arbitrierungsringen (12; 38, 40, 42, 44, 46, 48) gekoppelt sind, und jedem Arbitrierungsring eine Priorität zugeordnet ist.

6. Teilnehmer nach Anspruch 5 zur Kopplung wobei die Mittel zur Anforderung eines Zugriffs eines ersten der Teilnehmer mit einer ersten Priorität ausgebildet sind, die Mittel zur Prüfung so ausgebildet sind, um zu überprüfen, ob das erste Signal zur Anzeige, dass der der ersten Priorität zugeordnete Arbitrierungsring freigegeben ist, an dem Eingang anliegt, die Mittel zur Ausgabe zur Ausgabe des zweiten Signals auf dem der ersten Priorität zugeordneten Arbitrierungsring durch den Teilnehmer ausgebildet sind und mit:
- Mitteln zur Prüfung, ob das zweite Signal an einem Eingang des Teilnehmers für den niederpriorsten Arbitrierungsring oder an einem Eingang des Teilnehmers für einen Arbitrierungsring, der einer höheren Priorität als der ersten Priorität zugeordnet ist, anliegt,
- Mitteln zur Ausgabe des zweiten Signals auf den niederpriorsten Ring.

7. Teilnehmer nach Anspruch 5 mit Mitteln (50, 529 zur Repräsentierung von Zugriffsanforderungen der Teilnehmer einer zweiten Priorität in einem Arbitrierungsring, der einer höheren dritten Priorität zugeordnet ist.

8. Teilnehmer nach einem der vorhergehenden Ansprüche 5, 6 oder 7, wobei es sich bei dem vorgegebenen Zeitintervall um einen Bustakt (34) handelt.

9. Kommunikationssystem mit mehreren Teilnehmern, wobei jeder Teilnehmer nach einem der vorhergehenden Ansprüche 5 bis 8 ausgebildet ist, und mit einem oder mehreren der Arbitrierungsringe (38, 40, 42, 44, 46, 48) zur Kopplung der Teilnehmer.

## Claims

1. Method for arbitrating access to a data bus between users (Tn 1, Tn 2 ...), the users being linked by at least one arbitration ring (12; 38, 40, 42, 44, 46, 48), with the following steps:
a) Request for access by a first of the users,
b) Check whether a first signal, to indicate that one of the arbitrations rings is released, is present at an input (16) of the first user,
c) Outputting (18) of a second signal by the first user, if the first signal is present,
d) Check whether the first signal is still present at the input of the first user at the end of a predefined time interval,
e) Access by the first user, if the first signal was still present at the end of the predefined time interval **characterised in that** the users are linked by a number of arbitration rings (12; 38, 40, 42, 44, 46, 48) and a priority is assigned to each arbitration ring.

2. Method according to Claim 1,
the request for access by a first of the users being made with a first priority and the check taking place to determine whether a first signal, to indicate that the arbitration ring assigned to the first priority is released, is present at the input (16) of the first user and the outputting (18) of the second signal taking place for the arbitration ring assigned to the first priority and with the further steps:
- check whether the second signal is present at an input of the user for the lowest priority arbitration ring or at an input of the user for an arbitration ring, which is assigned to a higher priority than the first priority,
- outputting of the second signal for the lowest priority ring,
- access by the first user.

3. Method according to Claim 2,
with a virtual user (50, 52) to represent access requests by users of a second priority in an arbitration ring, which is assigned to a higher third priority.

4. Method according to Claim 1, 2 or 3,
the predefined time interval being a bus clock pulse of the data bus.

5. Users for access to a data bus (10) with
a) means for requesting access,
b) means for checking whether a first signal, to indicate that one of the arbitration rings is released, is present at an input (16) of the first user,
c) means for outputting (18) a second signal by the first user, if the first signal is present,
d) means for checking whether the first signal is still present at the input of the first user at the end of a predefined time interval,
e) means for access by the first user, if the first signal was still present at the end of the predefined time interval, **characterised in that** the users are linked by a number of arbitration rings (12; 38, 40, 42, 44, 46, 48) and a priority is assigned to each arbitration ring.

6. Users according to Claim 5 for linking,
the means for requesting access by a first of the users being configured with a first priority, the means for checking being configured to check whether the first signal, to indicate that the arbitration ring assigned to the first priority is released, is present at the input, the means for outputting the second signal for the arbitration ring assigned to the first priority being configured by the user and with
- means for checking whether the second signal is present at an input of the user for the lowest priority arbitration ring or at an input of the user for an arbitration ring, which is assigned to a higher priority than the first priority,
- means for outputting the second signal to the lowest priority ring.

7. Users according to Claim 5 with means (50, 52) for representing access requests by the users of a second priority in an arbitration ring, which is assigned to a higher third priority.

8. Users according to one of the preceding Claims 5, 6 or 7, the predefined time interval being a bus clock pulse (34).

9. Communication system with a plurality of users, each user being configured according to one of the preceding claims 5 to 8 and with one or a plurality of the arbitration rings (38, 40, 42, 44, 46, 48) for linking users.

## Revendications

1. Procédé d'arbitrage d'un accès à un bus de données entre des utilisateurs (Tn1, Tn2, ...), les utilisateurs étant connectés par au moins un anneau d'arbitrage (12 ; 38, 40, 42, 44, 46, 48), avec les étapes suivantes :
a) demande de l'accès par un premier utilisateur,
b) vérification si un premier signal indiquant que l'un des anneaux d'arbitrage est libéré se trouve à une entrée (16) du premier utilisateur,
c) sortie (18) d'un deuxième signal par le premier utilisateur lorsque le premier signal est présent,
d) vérification si le premier signal se trouve encore, à la fin d'un intervalle de temps prédéterminé, à l'entrée du premier utilisateur,
e) accès par le premier utilisateur lorsque le premier signal était encore présent à la fin de l'intervalle de temps prédéterminé,
**caractérisé par le fait que** les utilisateurs sont connectés par un certain nombre d'anneaux d'arbitrage (12 ; 38, 40, 42, 44, 46, 48) et qu'une priorité est associée à chaque anneau d'arbitrage.

2. Procédé selon la revendication 1, dans lequel la demande de l'accès par un premier utilisateur s'effectue avec une première priorité, dans lequel une vérification s'effectue alors pour savoir si un premier signal indiquant que l'anneau d'arbitrage associé à la première priorité est libéré se trouve à l'entrée (16) du premier utilisateur et dans lequel la sortie (18) du deuxième signal s'effectue sur l'anneau d'arbitrage associé à la première priorité, avec les autres étapes suivantes :
- vérification si le deuxième signal se trouve à une entrée de l'utilisateur destinée à l'anneau d'arbitrage de priorité minimale ou à une entrée de l'utilisateur destinée à un anneau d'arbitrage qui est associé à une priorité plus grande que la première priorité,
- sortie du deuxième signal sur l'anneau de priorité minimale,
- accès par le premier utilisateur.

3. Procédé selon la revendication 2, avec un utilisateur virtuel (50, 52) destiné à représenter des demandes d'accès des utilisateurs d'une deuxième priorité dans un anneau d'arbitrage qui est associé à une troisième priorité plus grande.

4. Procédé selon la revendication 1, 2 ou 3, dans lequel l'intervalle de temps prédéterminé est égal à un cycle du bus de données.

5. Utilisateur pour l'accès à un bus de données (10), comportant :
a) des moyens pour la demande d'un accès,
b) des moyens pour la vérification si un premier signal indiquant que l'un des anneaux d'arbitrage est libéré se trouve à une entrée (16) du premier utilisateur,
c) des moyens pour la sortie (18) d'un deuxième signal par le premier utilisateur lorsque le premier signal est présent,
d) des moyens pour la vérification si le premier signal se trouve encore, à la fin d'un intervalle de temps prédéterminé, à l'entrée du premier utilisateur,
e) des moyens pour l'accès du premier utilisateur lorsque le premier signal était encore présent à la fin de l'intervalle de temps prédéterminé,
**caractérisé par le fait que** les utilisateurs sont connectés par un certain nombre d'anneaux d'arbitrage (12 ; 38, 40, 42, 44, 46, 48) et qu'une priorité est associée à chaque anneau d'arbitrage.

6. Utilisateur selon la revendication 5 pour la connexion, dans lequel les moyens pour la demande sont conçus pour la demande d'un accès par un premier utilisateur avec une première priorité, les moyens pour la vérification sont conçus pour la vérification si un premier signal indiquant que l'anneau d'arbitrage associé à la première priorité est libéré se trouve à l'entrée et les moyens pour la sortie sont conçus pour la sortie du deuxième signal par l'utilisateur sur l'anneau d'arbitrage associé à la première priorité, comportant :
- des moyens pour la vérification si le deuxième signal se trouve à une entrée de l'utilisateur destinée à l'anneau d'arbitrage de priorité minimale ou à une entrée de l'utilisateur destinée à un anneau d'arbitrage qui est associé à une priorité plus grande que la première priorité,
- des moyens pour la sortie du deuxième signal sur l'anneau de priorité minimale.

7. Utilisateur selon la revendication 5, comportant des moyens (50, 52) pour représenter des demandes d'accès des utilisateurs d'une deuxième priorité dans un anneau d'arbitrage qui est associé à une troisième priorité plus grande.

8. Utilisateur selon l'une des revendications précédentes 5, 6 ou 7, l'intervalle de temps prédéterminé étant égal à un cycle de bus (34).

9. Système de communication comportant plusieurs utilisateurs, chaque utilisateur étant conçu selon l'une des revendications précédentes 5 à 8, et un ou plusieurs anneaux d'arbitrage (38, 40, 42, 44, 46, 48) pour la connexion des utilisateurs.
